# EUROPEAN PATENT APPLICATION

(11) **EP 4 755 267 A1**
(43) Date of publication of application: **10.06.2026**
(21) Application number: 24218029.7
(22) Date of filing: 06.12.2024
(51) Int. Cl.: A47J 27/00, A47J 43/07

(54) **KITCHEN MACHINE AND METHOD FOR OPERATING THE SAME**

(71) Applicant: BSH Hausgeräte GmbH, 81739 München (DE)
(72) Inventor: Brglez, Dejan, 1290 Grosuplje (SI); Orbanic, Henri, 1000 Ljubljana (SI); Koscak, Ales, 6230 Postojna (SI); Novakovic, Tadej, 3331 Nazarje (SI); Amon, Matej, 3332 Recica ob Savinji (SI); Hickl, Karin, 81377 München (DE); Reese, Maximiliane, 88471 Laupheim (DE)

(57) **Abstract**

The present invention relates to a kitchen machine (1) comprising
- a container (2) with a bottom (3),
- a heating device (4) with a heating element (5) which is or can be connected to the bottom (3) of the container (2) in a heat-transferring manner via a contact surface (6),
- a spring device (7) which preloads the heating element (5) against the bottom (3) of the container (2),
- wherein a heat-expanding element (8) is provided which is connected to the heating element (5) in a heat-transferring manner and and increases a preloading of the heating element (5) against the bottom (3) of the container (2) with increasing temperature.

This makes it possible to carry out a cooking process more quickly and in an energy-saving manner.

## Description

The present invention relates to a kitchen machine. The invention also relates to a method for operating such a kitchen machine.

Modern kitchen machines, such as multifunctional kitchen machines, are able to prepare entire dishes and not only stir or knead the food, but also cook it, for example, to boil or fry it. Such kitchen machines have a heating device for cooking, which is usually connected to a bottom of a container, for example a bowl of the kitchen machine, in a heat-transferring manner via a contact surface.

The efficiency of the heat transfer from a heating element of the heating device to the container or bowl has a significant impact on both the heat-up speed and precise temperature control, which is particularly important for preparing tasty dishes. If, for example, there is a noticeable thermal contact resistance between the heating element and the container connected to this heating element in a heat-transferring manner, this will lead to a delay in the temperature rise, which will also affect a PID temperature control (regulation). To minimize this thermal resistance, the size of a heat-transferring contact surface between the bottom of the container and the heating element can be increased and/or a spring device can be provided to increase the contact pressure of the heating element against the container, i.e. the preload of the heating element against the bottom of the container.

When two materials are pressed together, only part of the respective surface actually comes into contact with the opposite surface due to the surface roughness of the two contact surfaces. The lack of flatness or increased roughness can increase further over time due to material deformation. In addition, any residues that accumulate during use, such as food residues that burn onto the heating element, can reduce the heat-transferring contact and thus significantly impair the efficiency of the heat transfer.

The present invention is therefore concerned with the problem of providing a kitchen machine that can be used to at least partially overcome the disadvantages known from the prior art.

This problem is solved by the subject matter of the independent claim 1 according to the invention. Advantageous embodiments are the subject of the dependent claims.

The present invention is based on the general idea of not only using a spring device to increase the heat transfer between a heating element of a heating device and a bottom of a container of a kitchen machine, but also a heat-expanding element which, when the heating device is active, is heated by the heating element of the heating device and thus expands, thereby increasing the preload (bias) of the heating element against the container. The kitchen machine according to the invention has a container or a bowl with a bottom and a heating device with a heating element that is or can be connected to the bottom of the container via a contact surface in a heat-transferring manner. Furthermore, the kitchen machine according to the invention comprises a spring device which preloades (biases) the heating element against the bottom of the container. If the container is inserted into the kitchen machine and fixed in (to) it, there is already a certain preload of the heating element against the bottom of the container due to the spring device. This can be achieved, for example, by means of an oblique bayonet closure (coupling), by means of which the container is fixed in the kitchen machine. When the bayonet closure is closed, the container is thus slightly rotated and at the same time pressed downwards in the axial direction onto the heating element of the heating device. According to the invention, a heat-expanding element is now provided, which is connected to the heating element in a heat-transferring manner and which increases a preload of the heating element against the bottom of the container as the temperature rises. By increasing the preload, i.e. by increasing the axial force exerted on the contact surfaces of the heating element and the bottom of the container, roughness peaks or unevenness can be plastically or elastically deformed, depending on the material properties, whereby a heat-transferring contact surface can be increased and a thermal contact resistance can be reduced. By means of such a heat-expanding element, it is comparatively easy and, in particular, possible without further electrical control to increase the heat-transferring contact between the heating element and the container when needed, without the user having to take any further action. When the heating process is complete and the heat-expanding element cools down, it returns to its original state.

In a favorable further improvement of the kitchen machine according to the invention, the heat-expanding element has a bimetal. Such a bimetal usually consists of two superimposed layers of different metals that are connected to one another in a material-locking or form-fitting manner. Due to the different coefficients of thermal expansion of the metals used, one of the layers expands more than the other, causing the bimetal to deform. A bimetal of this kind is a comparatively simple product in terms of manufacturing and technology and helps to increase the preload force of the heating element against the bottom of the container as the temperature rises. Depending on the choice of metals used in the bimetal, different temperature-related operations can be preset. In addition, such bimetals are not only structurally simple to manufacture, but also cost-effective, so that the invention can be realized in existing kitchen machine concepts with comparatively little effort.

In a particularly preferred embodiment of the kitchen machine according to the invention, the heat-expanding element has an expanding material element, in particular an expanding wax element. Such an expanding material element usually has a housing that is filled with an expanding material, for example wax or gas. The expanding material element can just comprise wax or gas. Alternatively, an oil or a hard paraffin wax can also be used. A material-dependent phase transition takes place as a result of a temperature change, causing the expanding material to undergo a significant change in volume. By means of a suitably designed housing, an expansion of the expanding material element can be achieved that is proportional to the temperature change. When the expanding material cools down again, a working piston can be pushed back into the housing by means of a corresponding spring mechanism.

In another advantageous embodiment of the kitchen machine according to the invention, the heat-expanding element has a shape memory alloy. Shape memory alloys are special metals that can exist in two different crystal structures. They therefore have two different phases, wherein a shape transformation is based on a temperature-dependent lattice transformation. Such shape memory alloys can be produced and used in almost any configuration, making it relatively easy to individually select and realize a temperature-dependent contact pressure of the heating element on the bottom of the container. Furthermore, such shape memory alloys are cost-effective and compact, and can therefore even be integrated into existing kitchen machine concepts.

The heat- expanding element is arranged between the heating element and the spring device. If, for example, the heat-expanding element is plate-like, there is a comparatively large heat-transferring contact surface to the heating element, which means that the heat-expanding element heats up particularly quickly when the heating device is activated. The rapid heating of the heat-expanding element also causes its volume to increase comparatively quickly, thereby comparatively quickly increasing the contact pressure of the heating element against the bottom of the container, whereby significantly improved heat transfer can be achieved.

In a particularly preferred embodiment of the kitchen machine according to the invention, the spring device has a helical spring. Such a helical spring, which for example interacts with the heating element via the heat-expanding element, is a component that can be produced simply, not only in terms of manufacturing technology, but is also cost-effective, and can be used to preload the heating element against the bottom of the container. Such helical springs can be designed in almost any way with regard to their spring stiffness, which means that the contact pressure of the heat-expanding element against the heating element or of the heating element against the bottom can be directly impacted.

In another particularly preferred embodiment of the kitchen machine according to the invention, it is designed as a multifunction kitchen machine and has at least one of the following components or accessories: a mixer, a scale, a time measuring device, a computer device connected in communication with the other components and having at least one cooking program. Such multifunction kitchen machines can already be found in many households and, in comparison to conventional kitchen machines, not only allow for kneading and mixing, but also the preparation of entire dishes, including the frying (roasting) and cooking of meat, vegetables, etc. With the appropriate cooking and preparation programs, such multifunction kitchen machines are also able to enable even inexperienced users to prepare high-quality meals with relative ease.

The bottom of the container is advantageously designed as a metal block. Such a metal block not only allows a particularly stable design to be achieved, but also ensures that the heat is distributed evenly in/at the bottom, thus reliably avoiding so-called hotspots in the container and allowing the food arranged in it to be heated evenly. Even heating and even cooking ensure that the prepared food is of high quality.

The present invention is also based on the general idea of providing a method for operating a kitchen machine as described in the previous paragraphs, whereby the advantages mentioned with regard to the kitchen machine can also be transferred to the method according to the invention. In the method according to the invention, a food product is first placed in the container or bowl of the kitchen machine, whereby the container or bowl is then or previously fixed in (to) the kitchen machine on the heating element of the heating device. Such a fixing can be realized, for example, by a bayonet closure which, upon closing (blocking), not only causes the container to turn but also causes it to move axially towards the heating element of the heating device, thus preloading the bottom of the container against the heating element. The heating element is connected to the bottom of the container via a contact surface in a heat-transferring manner and is preloaded against the bottom of the container by means of the spring device. The heating device is then switched on, or a corresponding boiling or cooking program is started, causing the heating element to heat up. Through the heat-transferring contact with the heat-expanding element, the heating element also heats the heat-expanding element, causing the latter to expand and increase the preload of the heating element against the bottom of the container. By increasing this preloading of the contact surfaces between the heating element and the bottom of the container, roughness peaks or unevenness in particular can plastically or elastically deform depending on the material properties, whereby the contact surfaces can be increased and a thermal contact resistance, i.e. a heat transfer resistance, can be reduced. The method according to the invention can thus be used not only to cook, fry or prepare food in general more effectively, but also in a way that saves energy.

Further important features and advantages of the invention can be seen in the dependent claims, in the drawings and in the associated figure description on the basis of the drawings.

It is understood that the features mentioned above and those to be explained below can be used not only in the respective combination given, but also in other combinations or on their own, without leaving the scope of the present invention. The above-mentioned and subsequently mentioned components of a higher-level unit, such as a device, an apparatus or an arrangement, which are designated separately, can form separate parts or components of this unit or be integral areas or sections of this unit, even if this is shown differently in the drawings.

Preferred embodiments of the invention are shown in the drawings and are explained in more detail in the following description, where the same reference signs refer to the same or similar or functionally identical components.

The following show, in each case schematically:
- Figure 1: a sectional view of a kitchen machine according to the invention,
- Figure 2: individual method steps of a method according to the invention for operating a kitchen machine.

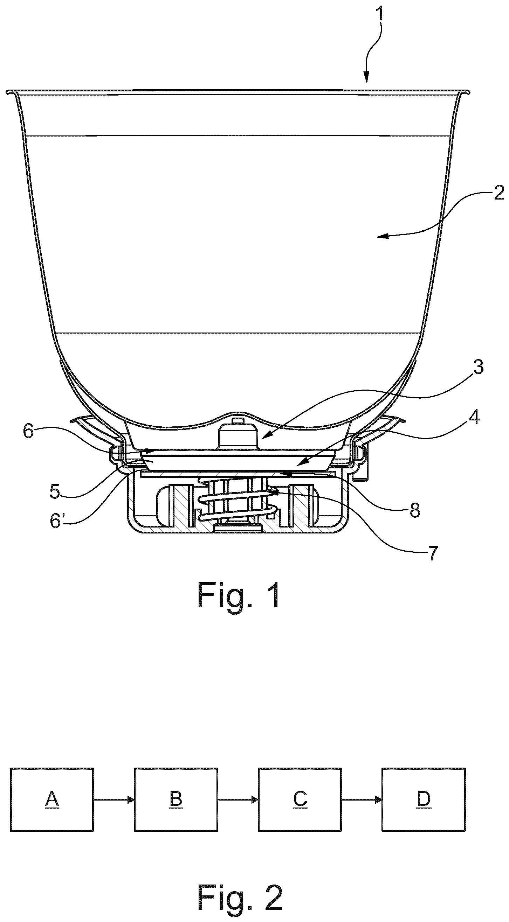

According to Figure 1, a kitchen machine 1 according to the invention, which may be designed, for example, as a multifunctional kitchen machine, has a container 2 or a bowl with a bottom 3. The bottom 3 can be formed as a metal block and be correspondingly heavy and solid. Forming such a base 3 from solid metal can result in particularly even heating of food arranged in the container 2, whereby a cooking or general cooking result can be significantly improved.

A heating device 4 having a heating element 5 is located below the bottom 3, the heating element 5 being designed, for example, as an electrical resistance heating element. The heating element 5 is connected to the bottom 3 of the container 2 in a heat-transferring manner via a contact surface 6, or can be connected to the base 3 of the container 2 in a heat-transferring manner.

Furthermore, a spring device 7 is provided, which in the present case is designed as a helical spring and which preloads (biases) the heating element 5 of the heating device 4 against the bottom 3 of the container 2, thereby enabling improved heat transfer. According to the invention, a heat-expanding element 8 is provided, which is connected to the heating element 4 in a heat-transferring manner and expands with increasing temperature and thus increases the preloading of the heating element 4 against the bottom 3 of the container 2 with increasing temperature. The heat-expanding element 8, which can generally also be referred to as a temperature-dependent module, thus increases a heat-transferring contact surface 6 with increasing temperature, without making it more difficult to position the container 2 in the kitchen machine 1. This is due in particular to the fact that it only fulfills its main function when it is heated by the heating element 5.

Since heat transfer between the heating element 4 and the bottom 3 of the container 2 is determined in particular by the surface properties of the heating element 4 and the bottom 3, in particular by their roughness and flatness, roughness peaks or unevenness can be leveled plastically or elastically by increasing the axial force by means of the heat-expanding element 8, as a result of which the contact area 6 increases and the heat transfer is significantly improved. This not only makes it possible to cook food effectively, but also, in particular, to cook food in an energy-efficient manner, since less heating energy is lost between the heating element 4 and the bottom 3 of the container 2 due to the improved heat transfer.

The heat-expanding element 8 can, for example, be designed as a bimetal or comprise a bimetal of this kind, whereby a temperature-dependent change in shape is not only made simple in terms of production, but is also cost-effective. In such a bimetal, two different metals are joined to one another in a material-locking and form-fitting manner, whereby, due to the different coefficients of thermal expansion, when the bimetal is heated, the two metals expand differently and the bimetal thus changes its shape. A bimetal of this kind can change shape in proportion to the temperature rise, although it is also conceivable that there may be an abrupt expansion when a predefined temperature limit is exceeded.

In addition or as an alternative, the heat-expanding element 8 can also be designed as an expanding element and have a wax- or gas-filled cavity. Such an expanding element has an expanding material whose volume changes depending on the temperature. If the temperature increases, the expansion material expands and presses, for example, on a working piston that is separated from the expanding material by a membrane, causing the piston to extend. If the temperature decreases again, the volume decreases and a spring pushes the piston back to its original position. Such expanding elements not only enable a simple manufacturing process, but also a cost-effective solution for realizing the inventive idea.

The heat-expanding element 8 can, of course, also have a shape memory alloy, which has two different structures or phases depending on the temperature. Such shape memory alloys are comparatively easy and inexpensive to manufacture and use for the invention.

If we look at Figure 1 again, we can see that the heat-expanding element 8 is arranged between the heating element 4 and the spring device 7, which in this case is designed as a helical spring. This allows a large-area contact surface 6' to be created between the heat-expanding element 8 and the heating element 5 of the heating device 4, whereby a comparatively fast heating of the heat-expanding element 8 occurs during the operation of the heating device 4 and thus also a comparatively fast increase in a preloading force of the heating element 5 against the bottom 3 of the container 2. Due to the fact that the spring device 7 is designed, for example, as a helical spring, it can likewise be manufactured not only simply and with almost any spring properties, but also cost-effectively. Alternatively, it is of course also conceivable that such a spring device 7 has not just one but several helical springs, which enable a particularly even support of the heat-expanding element 8 and thereby also of the heating element 5 of the heating device 4.

The kitchen machine 1 can be designed as a multifunction kitchen machine, as mentioned at the beginning, and can have at least one of the following components, which are not shown in Figure 1: a mixer, a scale, a time measuring device, a computer device connected in a communicating way to the other components, with at least one cooking or roasting program. Such multifunction kitchen machines enable even inexperienced users to prepare high-quality and tasty meals with relative ease. In particular, they also enable roasting, cooking, frying, etc.

A method for operating the kitchen machine 1 described in Figure 1 and in the previous paragraphs is shown in accordance with Figure 2, whereby the method according to the invention comprises at least four method steps A to D. In method step A, a food product is first placed into the container 2, whereupon, in method step B, the container 2 is fixed in the kitchen machine 1 on the heating element 5 of the heating device 4. Such a fixing can be realized, for example, by a bayonet closure, which is configured in such a way that, by rotating the container 2 in the bayonet closure, it simultaneously also causes an axial adjustment of the container 2 towards the heating element 5. An "axial adjustment" refers to an axial direction that runs parallel to the axis of the usually round container 2. In the fixed state, the heating element 5 is connected to the bottom 3 of the container 2 via the contact surface 6 in a heat-transferring manner and is additionally preloaded against the bottom 3 of the container 2 by means of the spring device 7.

In the subsequent method step C, the heating device 4 is switched on, causing the heating element 5 of the heating device 4 to heat up. In method step D, the heating element 5 now heats the heat-expanding element 8, causing the latter to expand and increase the preloading of the heating element 5 against the bottom 3 of the container 2, thereby enabling a significantly improved heat transfer from the heating element 5 to the bottom 3 and thus to the container 2.

By means of the method according to the invention, a use of the heat-expanding element 8 can level a contact surface 6 between the bottom 3 of the container 2 and the heating element 5 of the heating device 4 or reduce roughness peaks present there, whereby the contact surface 6 can be enlarged overall and the heat transfer can be improved. This means that meals can be prepared not only in a shorter time but also with significantly less energy.

All in all, the kitchen machine 1 according to the invention and the method according to the invention provide a constructively simple and cost-effective solution for energy-saving and time-optimized operation of the kitchen machine 1.

### List of references

- 1: kitchen machine
- 2: container
- 3: bottom
- 4: heating device
- 5: heating element
- 6: contact surface
- 7: spring device
- 8: heat-expanding element

## Claims

1. Kitchen machine (1) comprising
- a container (2) with a bottom (3),
- a heating device (4) with a heating element (5) which is or can be connected to the bottom (3) of the container (2) in a heat-transferring manner via a contact surface (6),
- a spring device (7) which preloads the heating element (5) against the bottom (3) of the container (2),
- wherein a heat-expanding element (8) is provided which is connected to the heating element (5) in a heat-transferring manner and which increases a preloading of the heating element (5) against the bottom (3) of the container (2) with increasing temperature.

2. Kitchen machine (1) according to claim 1,
**characterized in that**
the heat-expanding element (8) has a bimetal.

3. Kitchen machine (1) according to claim 1 or 2
**characterized in that**
the heat-expanding element (8) has an expanding material element, in particular an expanding material element comprising wax or gas.

4. Kitchen machine (1) according to one of the claims 1 to 3,
**characterized in that**
the heat-expanding element (8) has a shape memory alloy.

5. Kitchen machine (1) according to one of the preceding claims,
**characterized in that**
the heat-expanding element (8) is arranged between the heating element (5) and the spring device (7).

6. Kitchen machine (1) according to one of the preceding claims,
**characterized in that**
the spring device (7) has a helical spring.

7. Kitchen machine (1) according to one of the preceding claims,
**characterized in that**
the kitchen machine (1) is designed as a multifunction kitchen machine and has at least one of the following components: a stirrer, a scale, a time measuring device, a computer device connected in a communicating way to the other components and having at least one cooking program.

8. Kitchen machine (1) according to one of the preceding claims,
**characterized in that**
the bottom (3) of the container (2) is formed as a metal block.

9. A method for operating a kitchen machine (1) according to one of the preceding claims, in which
- a food product is introduced into the container (2),
- the container (2) is fixed in the kitchen machine (1) on the heating element (5) of the heating device (4), the heating element (5) being connected in a heat-transferring manner to the bottom (3) of the container (2) via a contact surface (6) and being preloaded against the bottom (3) of the container (2) by means of the spring device (7),
- the heating device (4) is switched on, causing the heating element (5) to heat up,
- the heating element (5) heats the heat-expanding element (8), causing it to expand and increase the preload of the heating element (5) against the bottom (3) of the container (2).
